## Europäisches Patentamt

## European Patent Office

## Office européen des brevets

(19)

(11) Veröffentlichungsnummer: **0 043 097**
**B1**

(12)

# EUROPÄISCHE PATENTSCHRIFT

(45) Veröffentlichungstag der Patentschrift:
27.02.85

(51) Int. Cl.⁴: **C 08 L 97/02,** C 08 H 5/04

(21) Anmeldenummer: **81104875.0**

(22) Anmeldetag: **24.06.81**

(54) Härtbare Überzugs- und Bindemittel und deren Verwendung.

(30) Priorität: **26.06.80 DE 3023914**

(73) Patentinhaber: **HOECHST AKTIENGESELLSCHAFT, Postfach 80 03 20, D-6230 Frankfurt am Main 80 (DE)**

(43) Veröffentlichungstag der Anmeldung:
**06.01.82 Patentblatt 82/1**

(72) Erfinder: **Hesse, Wolfgang, Dr., Pfingstbornstrasse 83, D-6200 Wiesbaden (DE)**
Erfinder: **Jung, Albert, Dr., Kellerskopfstrasse 2, D-6204 Taunusstein (DE)**

(45) Bekanntmachung des Hinweises auf die Patenterteilung:
**27.02.85 Patentblatt 85/9**

(84) Benannte Vertragsstaaten:
**AT BE CH DE FR GB IT LI NL SE**

(56) Entgegenhaltungen:
**DE - B - 1 217 528**
**GB - A - 298 968**
**US - A - 1 721 315**
**US - A - 1 923 756**
**US - A - 3 405 053**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Diese Anmeldung bezieht sich auf ein Verfahren zur Herstellung von Bindemitteln auf Basis von teilsynthetischen Kunstharzen, die durch Umsetzung von Phenolen mit Holz und gegebenenfalls weiteren Substanzen hergestellt werden, sowie deren Verwendung.

Es ist bekannt, einfache oder polymere Zucker mit Phenol in Gegenwart von sauren oder basischen Katalysatoren zu Kunstharzen umzusetzen. Diese Zucker oder polymeren Zucker bedürfen zur Isolation aus ihrem natürlichen Vorkommen in Form von Ernteprodukten oder Holz aufwendiger Reinigungsverfahren. Die bekannten Verfahren führen nicht zu hochwertigen Bindemitteln und insbesondere nicht zu solchen Kunstharzen für Lackanwendung, die mit anderen vernetzbaren oder nicht vernetzbaren, aber plastifizierenden Kunstharzen oder mit Metallalkoholaten verträglich sind.

Es ist ferner bekannt, ein 24 h altes Gemisch aus Fichtensägemehl, Phenol und Schwefelsäure mit Phenolresol umzusetzen.

Ein weiteres bekanntes Verfahren beschreibt die Behandlung von Lignocellulose mit Dampf, Extraktion und Kondensation mit Phenolen, Kresolen usw.

Keines dieser Verfahren hat jedoch die alleinige Umsetzung von Phenolen, also in Abwesenheit von Aldehyd, zum Inhalt. Ausserdem sind die nach diesen beiden bekannten Verfahren hergestellten Produkte nicht verträglich mit Phenol- und Melaminharzen.

Gegenstand der Erfindung sind Überzugs- und Bindemittel enthaltend A) ein Reaktionsprodukt aus Phenol und zerkleinertem Holz, hergestellt in der Gegenwart einer untergeordneten Menge einer Mineralsäure, B) ein Vernetzungsmittel in Form mindestens einer Substanz, ausgewählt aus der Gruppe bestehend aus Hexamethylentetramin, einem Resol, einem Harnstoffharz und einem Melaminharz, C) ein Epoxydharz und/oder ein Urethanharz, und D) gegebenenfalls ein Metallalkoholat.

Es wurde überraschend gefunden, dass diese Überzugs- und Bindemittel die Nachteile der bekannten Produkte vermeiden.

Im Gegensatz zu den bekannten Umsetzungsprodukten aus Phenol mit gereinigten, gegebenenfalls polymeren Zuckern oder mit den Celluloseverbindungen sind die neuen Harze mit allen anderen in Frage kommenden Lackrohstoffen hervorragend verträglich.

Im allgemeinen wird die Umsetzung bei einer Temperatur von 120 bis 200, vorzugsweise 130 bis 180° C, und zweckmässig in Gegenwart von katalytischen Mengen, z.B. 0,1 bis 5, vorzugsweise 0,3 bis 2 Gew.-%, bezogen auf Phenol, einer anorganischen Säure wie Phosphor-, Salz-, Bromwasserstoffsäure, vorzugsweise jedoch Schwefelsäure, vorgenommen.

Geeignete Phenole sind z.B. Kresole, Xylenole, vorzugsweise jedoch Phenol.

Nach einer Ausführungsform der Erfindung kann dem Reaktionsgemisch vor, während oder nach der Reaktion auch ein vinylaromatischer Kohlenwasserstoff wie Vinyltoluol, Divinylbenzol, α-Methylstyrol, vorzugsweise jedoch Styrol, zugesetzt werden. Obwohl die erfindungsgemäss erhaltenen Produkte schon eine gute Verträglichkeit mit anderen Harzen aufweisen, wird die Verträglichkeit durch den Zusatz von vinylaromatischen Verbindungen noch verbessert.

Die erfindungsgemäss erhaltenen Kunstharze vernetzen nicht selbst. Insofern entsprechen sie den aus Phenol und Aldehyden hergestellten Phenolharzen vom Novolaktyp. Sie können aber mit Vernetzungsmitteln wie — gegebenenfalls z.B. mit Alkyl, wie Methyl, Äthyl, Propyl, Butyl oder dergleichen substituierten — Phenolresolen, Harnstoffharzen, Melaminharzen oder dergleichen gemeinsam vernetzt werden. Für diese Anwendung ist die gute Verträglichkeit der Produkte mit diesen anderen Kunstharzen Voraussetzung.

Die Harze können bei einer Temperatur von 130 bis 280, vorzugsweise 170 bis 210° C, gehärtet werden. Hierbei richten sich die Härtungsbedingungen in der Regel nach der Härtungstemperatur des zugesetzten härtenden Kunstharzes.

Die Kombination der neuen Harze mit den genannten Vernetzern bzw. härtenden Kunstharzen bzw. mit weichmachenden Kunstharzen wie Epoxidharzen oder Urethanharzen ergibt Bindemittel, die zur Herstellung von gehärteten Formkörpern und Überzügen, wie Einbrennlacken mit hoher chemischer Widerstandsfähigkeit, z.B. gegen organische Säuren wie Milchsäure, Essigsäure oder gegen basische Substanzen, wie Amine, Ammoniak, wie sie in Lebensmitteln, z.B. Fischkonserven, auftreten können, und mit hoher Elastizität verwendet werden können.

Nach einer Ausführungsform der Erfindung ist es auch möglich, die erfindungsgemäss erhaltenen Produkte im Gemisch mit Metallalkoholaten, z.B. Aluminiumpropylat, -butylat, Titanpropylat, vorzugsweise Titanbutylat, zu verwenden. Auf diese Weise kann man gehärtete Überzüge mit einem besonders schönen, goldenen Farbton herstellen. Sie eignen sich deshalb gut für Metallackierungen, z.B. für Eisen, Stahl, verzinntes Stahl, Zinn, Zink und Aluminium, besonders aber als Lacke für die Innenlackierung von Lebensmittelverpackungen. Sie sind aber auch als Überzugsmittel für andere Substrate geeignet, z.B. für Glas, Keramik oder dergleichen.

Die Vernetzung der erfindungsgemäss erhaltenen neuen Bindemittel mit Hexamethylentetramin führt zu duroplastischen Werkstoffen, die sich für die Herstellung von härtbaren Formmassen, als Bindemittel für anorganische oder organische Faservliese oder zur Verstärkung von Kautschukprodukten eignen. Die Bindemittel können aber auch aufgrund ihrer phenolischen Hydroxylgruppen mit alkylierenden Reagenzien, z.B. mit Epichlorhydrin, zu Epoxidharzen umgesetzt werden.

In nachstehenden Beispielen bedeuten T Gewichtsteile und % Gewichtsprozent.

*Beispiele:*

1. *Herstellung eines Kunstharzes für die Vernetzung mit Hexamethylentetramin*

In einem Reaktionsgefäss, welches mit Rührer, Thermometer, Dosiereinrichtung für Holzmehl und Rückflusskühler ausgestattet ist, werden 940 T Phenol geschmolzen, mit 9,4 T konzentrierter Schwefelsäure versetzt und auf 150° C erhitzt. Bei dieser Temperatur werden 400 T Buchenholzmehl innerhalb 1 h eingerührt. Wenn sich nach einer weiteren Stunde alles gelöst hat, wird das Gemisch auf 180° C erhitzt. Bei dieser Temperatur kocht man 3 h am Rückfluss. Dann gibt man 4,7 T Magnesiumoxid zu, legt verminderten Druck an und destilliert bei einer Sumpftemperatur von maximal 220° C das nicht umgesetzte Phenol ab. Man erhält 590 T eines festen, spröden Kunstharzes, Schmelzpunkt 142° C, Viskosität 2180 mPa·s/ 20° C (50% Äthylenglykolmonoäthyläther).

100 T des Harzes werden in 100 T Äthylenglykolmonoäthyläther gelöst, 10 T Hexamethylentetramin zugegeben und das Gemisch 1 h bei 40° C gerührt. Unter diesen Bedingungen löst sich das Hexamethylentetramin auf. Die so erhaltene Lösung wird auf ihr Härtungsverhalten durch die sogenannte B-Zeit geprüft (vgl. Ullmann, Bd. 18, 4. Aufl. [1979], S. 252). Die B-Zeit bei 120° C beträgt 10 min 55 s, die B-Zeit bei 150° C 3 min 25 s.

Das erhaltene Harz lässt sich z.B. als Verstärkerharz für Kautschuk- oder Kunststoffmischungen oder für Formmassen verwenden.

2a. *Herstellung eines Kunstharzes für Einbrennlacke*

In der gleichen Apparatur wie im Beispiel 1 werden 1175 T Phenol mit 13,3 T konzentrierter Schwefelsäure versetzt und bei 160° C 500 T Buchenholzmehl eingetragen. Man schliesst 3 h bei 160° C auf, wobei am absteigenden Kühler 255 T eines Destillates abgetrennt werden. Dann stellt man auf Rückfluss und lässt 1300 T Styrol innerhalb 1 h zulaufen. Nach einer Nachreaktion von 2 h bei 160° C löst man den Ansatz in einem Gemisch aus 300 T Xylol und 300 T Äthylenglykolmonoäthyläther und erhält 3253 T einer Harzlösung, Rückstand (1 h/135° C) 75,5% entsprechend einem Festharzgehalt von 2460 T.

Diese Harzlösung versetzt man mit 260 T Butyltitanat sowie als Verdünnungsmittel mit 174 T Xylol und 174 T Äthylenglykolmonoäthyläther. Am Ende enthält man eine Lackkunstharzlösung in einer Ausbeute von 3820 T, Rückstand 66% (1 h/135° C), Viskosität 3280 mPa·s/20° C. Diese Kunstharzlösung ist beständig und verändert auch bei längerer Lagerung ihre Viskosität nur unwesentlich. Um die Lagerbeständigkeit zu beurteilen, wurde eine Probe dieser Kunstharzlösung 7 d bei 50° C gelagert. Dabei erfolgte ein Viskositätsanstieg auf 3420 mPa·s/20° C. Die Kunstharzlösung ist somit gut lagerbeständig.

2b. *Herstellung des Einbrennlacks*

Aus diesem Harz wird ein Konservendosenlackharz hergestellt durch Vermischen bzw. Lösen von 50 T eines handelsüblichen Epoxidharzes auf Basis Diphenylolpropan und Epichlorhydrin (Smp. 125 bis 132° C [Durrans], Epoxyäquivalentgewicht 1700 bis 2000), 30 T eines Resols auf Basis von tert.-Butylphenol und Formaldehyd (Viskosität 80 bis 150 mPa·s/20° C, 40% in Äthylenglykolmonoäthyläther) und 10 T der erhaltenen Harzlösung in 100 T Äthylenglykolmonoäthyläther. Dieser Lack wird mit weiterem Äthylenglykolmonoäthyläther auf eine Tauchviskosität von 14 DIN/s eingestellt.

Mit diesem Lack werden Platten aus verzinntem Weissblech tauchlackiert und nach dem Abtrocknen der Lösemittel 30 min bei 190° C eingebrannt.

Die erhaltenen Lackfilme zeichnen sich durch einen schönen goldenen Farbton aus, sind beständig gegen 2%ige Essigsäure im Sterilisationstest, beständig gegen 2%ige Natriumsulfidlösung und gut verformbar.

Lässt man in der angegebenen Lackrezeptur das erfindungsgemässe Harz weg, so erhält man Lackierungen mit sonst vergleichbaren Eigenschaften, aber einem hellen, gelbstichigen Farbton, der bei der Innenlackierung von Konservendosen unerwünscht ist.

*Vergleichsversuche*

V1.

In der gleichen Apparatur wie im Beispiel 1 werden 500 T Phenol, 5 T konzentrierter Schwefelsäure und 150 T Cellulose bei 160° C aufgeschlossen und wie im Beispiel 2 aufgearbeitet. Eine 50%ige Lösung dieses Harzes in Äthylenglykolmonoäthyläther ist nicht mit Titanbutylat verträglich. Das erhaltene Harz wird wie im Beispiel 2 mit 692 T Styrol alkyliert und das dabei erhaltene Produkt 50%ig in Äthylenglykolmonoäthyläther gelöst. Auch diese Lösung ist nicht mit Titanbutylat verträglich.

V2.

500 T Phenol, 5 T konzentrierte Schwefelsäure und 150 T pulverisierter Rohrzucker werden wie im Vergleichsversuch 1 miteinander umgesetzt und die Verträglichkeit des Reaktionsproduktes mit Titanbutylat geprüft. Es ist keine Verträglichkeit vorhanden. Das verbleibende Harz wird wie im Vergleichsversuch 1 mit Styrol alkyliert. Die Lösung dieses Harzes ist nicht mit Titanbutylat verträglich.

**Patentansprüche**

1. Überzugs- und Bindemittel enthaltend A) ein Reaktionsprodukt aus Phenol und zerkleinertem Holz, hergestellt in der Gegenwart einer untergeordneten Menge einer Mineralsäure, B) ein Vernetzungsmittel in Form mindestens einer Substanz, ausgewählt aus der Gruppe bestehend aus Hexamethylentetramin, einem Resol, einem Harnstoffharz und einem Melaminharz, C) ein Epoxydharz und/oder ein Urethanharz, und D) gegebenenfalls ein Metallalkoholat.

2. Überzugsmittel nach Anspruch 1, dadurch gekennzeichnet, dass das Reaktionsprodukt (A) ein solches Produkt ist, das einer weiteren Reaktion mit einem vinylaromatischen Kohlenwasserstoff unterworfen worden ist.

3. Überzugsmittel nach Anspruch 2, dadurch gekennzeichnet, dass der vinylaromatische Kohlenstoff Styrol ist.

4. Überzugsmittel nach einem oder mehreren der Ansprüche 1 bis 3, dadurch gekennzeichnet, dass das Metallalkoholat Butyltitanat ist.

5. Verwendung von Überzugs- und Bindemitteln nach einem oder mehreren der Ansprüche 1 bis 4 zur Herstellung von Formkörpern und Überzügen auf einem Substrat.

6. Ausführungsform nach Anspruch 5, dadurch gekennzeichnet, dass das Substrat für die Herstellung von Überzügen ein Metallsubstrat ist.

7. Ausführungsform nach einem der Ansprüche 5 oder 6, dadurch gekennzeichnet, dass das Substrat gegen eine Temperatur im Bereich von 130 bis 280° C widerstandsfähig ist.

## Claims

1. Coating and binding material containing (*A*) a reaction product of phenole and comminuted wood, prepared in the presence of a minor amount of a mineral acid, (*B*) a cross-linking agent in the form of at least one substance, selected from the group consisting of hexamethylene tetramine, a resole, a urea resin and a melamine resin, (*C*) an epoxy resin and/or an urethane resin, and (*D*) optionally a metal alcoholate.

2. Coating material according to Claim 1, characterized in that the reaction product (*A*) is such a product which has been reacted in a further reaction with a vinyl-aromatic hydrocarbon.

3. Coating material according to Claim 2, characterized in that the vinyl-aromatic hydrocarbon is styrene.

4. Coating material according to one or more of Claims 1 to 3, characterized in that the metal alcoholate is butyl titanate.

5. Use of coating and binding materials according to one or more of Claims 1 to 4 for the preparation of moldings and coatings on a substrate.

6. Embodiment according to Claim 5, characterized in that the substrate for the preparation of coating is a metal substrate.

7. Embodiment according to Claim 5 or 6, characterized in that the substrate is resistant to a temperature in the range of from 130 to 280° C.

## Revendications

1. Produits de revêtement et liants qui contiennent A) un produit qui provient de la réaction d'un phénol avec du bois broyé et qui a été préparé en présence d'une faible quantité d'un acide minéral, B) un réticulant sous la forme d'au moins un composé pris dans l'ensemble constitué par l'hexaméthylènetétramine, un résol, une résine d'urée et une résine de mélamine, C) une résine époxydique et/ou une résine d'uréthanne, et éventuellement D) un alcoolate de métal.

2. Produits de revêtement selon la revendication 1, caractérisés en ce que le produit réactionnel (A) est un produit du genre indiqué qui a été soumis à une réaction complémentaire avec un hydrocarbure vinylaromatique.

3. Produits de revêtement selon la revendication 2, caractérisés en ce que l'hydrocarbure vinylaromatique est le styrène.

4. Produits de revêtement selon l'une des revendications 1 à 3, caractérisés en ce que l'alcoolate de métal est le titanate de butyle.

5. Application de produits de revêtement et de liants selon l'une ou plusieurs des revendications 1 à 4 pour la fabrication d'objets moulés et de revêtements sur un substrat.

6. Application selon la revendication 5, caractérisée en ce que le substrat sur lequel on doit appliquer un revêtement est un substrat métallique.

7. Application selon l'une des revendications 5 ou 6, caractérisée en ce que le substrat est capable de résister à une température comprise entre 130 et 280° C.